# EUROPEAN PATENT APPLICATION

(11) **EP 4 258 054 A1**
(43) Date of publication of application: **11.10.2023**
(21) Application number: 21899989.4
(22) Date of filing: 30.11.2021
(51) Int. Cl.: G03B 21/56, B32B 17/06, B60J 1/00, G02F 1/1333

(54) **LIQUID CRYSTAL PROJECTION LAYER FOR GLASS, GLASS, VEHICLE, AND GLASS MANUFACTURING METHOD**

(30) Priority: 02.12.2020 CN 202011399775
(71) Applicant: Saint-Gobain Glass France, 92400 Courbevoie (FR)
(72) Inventor: LI, Daming, Shanghai 200245 (CN); FERRIERES-ZHAO, Li, Shanghai 200245 (CN); WANG, Lu, Shanghai 200245 (CN)
(74) Representative: Saint-Gobain Recherche
(86) International application number: PCT/CN2021/134284
(87) International publication number: WO 2022/116958

(57) **Abstract**

Embodiments of the present disclosure relate to a liquid crystal projection layer for use in a glass, glass, a vehicle and a method of manufacturing the glass. The glass comprises a first glass which comprises a first surface and a second surface opposite to each other. The liquid crystal projection layer comprises: a transparent projection layer disposed on a side of the first glass close to the second surface and configured to display a projected image received from a projector; and a liquid crystal module disposed between the first glass and the transparent projection layer and configured to be switchable between a transparent mode and a privacy mode, wherein in the transparent mode, the liquid crystal module allows the projected image displayed on the transparent projection layer to be transmitted towards the first glass, and in the privacy mode, the liquid crystal module prevents the projected image displayed on the transparent projection layer from being transmitted towards the first glass. The liquid crystal projection layer for use in a glass according to embodiments can keep transparent when the vehicle is running and achieve privacy protection when the transparent projection display is performed.

## Description

### FIELD

Embodiments of the present disclosure generally relate to the field of glass, and more particularly to a liquid crystal projection layer for use in a glass, a glass comprising the liquid crystal projection layer, a vehicle comprising the liquid crystal projection layer, a vehicle comprising the glass, a method for manufacturing the liquid crystal projection layer for use in the glass and a method of manufacturing the glass.

### BACKGROUND

Currently, a demand is increasingly found in vehicles, i.e., it is expected that more space or plane is needed as a carrier of presenting information media, in addition to a central control screen and a movable screen. To this end, some people in the industry have explored how to use a projector to perform projection display on the glass of the vehicle directly. However, the inventor of the present application discovers that such a solution of performing projection display on the glass of the vehicle needs to solve problems in many aspects. First, in a state that the vehicle is running normally, the glass of the vehicle needs to keep transparent to meet the requirements of safety and relevant laws and rules. However, how to perform projection display on the transparent glass is a problem. To solve the problem, a suitable transparent projection film needs to be selected to achieve projection display in a case where the glass keeps transparent. Such a projection film needs to be transparent and reflect the light projected on the glass into the field of view of people in the vehicle.

### SUMMARY

An object of the present disclosure is to provide a liquid crystal projection layer for use in a glass, a glass comprising the liquid crystal projection layer, a vehicle comprising the liquid crystal projection layer, a vehicle comprising the glass, a method for manufacturing the liquid crystal projection layer for use in the glass and a method of manufacturing the glass, to at least partially solve the above problems existing in the prior art.

According to a first aspect of the present disclosure, there is provided a liquid crystal projection layer for use in a glass. The glass comprises a first glass which comprises a first surface and a second surface opposite to each other. The liquid crystal projection layer comprises: a transparent projection layer disposed on a side of the first glass close to the second surface and configured to display a projected image received from a projector; and a liquid crystal module disposed between the first glass and the transparent projection layer and configured to be switchable between a transparent mode and a privacy mode, wherein in the transparent mode, the liquid crystal module allows the projected image displayed on the transparent projection layer to be transmitted towards the first glass, and in the privacy mode, the liquid crystal module prevents the projected image displayed on the transparent projection layer from being transmitted towards the first glass.

In the embodiments according to the present disclosure, the transparent projection display on the glass can be achieved with the transparent projection layer, and the switching between the transparent mode and the privacy mode can be implemented by using the liquid crystal module, wherein in the transparent mode, the glass can keep transparent, and in the privacy mode, the projected image displayed on the projection layer can be prevented from being transmitted towards the first glass, so that the projected image cannot be seen from the side of the first glass, thereby achieving the privacy protection. Such glass can meet the demand that the glass can keep transparent when the vehicle is running normally and can achieve privacy protection when the transparent projection display is performed. In addition, different mode combinations can be realized by combining the transparent projection layer and the liquid crystal module, thereby meeting the demands of different application scenarios.

In some embodiments, the liquid crystal module comprises: a liquid crystal layer comprising liquid crystal molecules; a first alignment layer and a second alignment layer which are respectively disposed on opposite sides of the liquid crystal layer, and configured to preset a deflection state of the liquid crystal molecules in the liquid crystal layer; a first transparent electrode layer and a second transparent electrode layer which are respectively disposed on outer sides of the first alignment layer and the second alignment layer relative to the liquid crystal layer, and configured to change the deflection state of the liquid crystal molecules in the liquid crystal layer when being powered, so that the liquid crystal module switches between the transparent mode and the privacy mode; a first transparent substrate and a second transparent substrate which are respectively disposed on outer sides of the first transparent electrode layer and the second transparent electrode layer relative to the liquid crystal layer and configured to carry the first transparent electrode layer and the second transparent electrode layer, respectively; and a first polarizer and a second polarizer which are respectively disposed on outer sides of the first transparent substrate and the second transparent substrate relative to the liquid crystal layer. In such embodiments, the deflection state of the liquid crystal molecules in the liquid crystal layer can be adjusted by controlling the powering condition of the first transparent electrode layer and the second transparent electrode layer, thereby implementing the switching of the liquid crystal module between the transparent mode and the privacy mode.

In some embodiments, polarization directions of the first polarizer and the second polarizer are perpendicular to each other, wherein the liquid crystal module is in the privacy mode when the first transparent electrode layer and the second transparent electrode layer are powered, and the liquid crystal module is in the transparent mode when the first transparent electrode layer and the second transparent electrode layer are not powered. In such embodiments, the liquid crystal module can be made in the privacy mode when the first transparent electrode layer and the second transparent electrode layer are powered, and made in the transparent mode when the first transparent electrode layer and the second transparent electrode layer are not powered. In this way, the switching of the liquid crystal module between the transparent mode and the privacy mode can be implemented accurately and reliably. In addition, the power consumption of the liquid crystal module can be reduced since the first transparent electrode layer and the second transparent electrode layer are powered only when projection display needs to be performed on the glass and the privacy protection is required, and the first transparent electrode layer and the second transparent electrode layer need not to be powered in other cases.

In some embodiments, polarization directions of the first polarizer and the second polarizer are parallel to each other, wherein the liquid crystal module is in the transparent mode when the first transparent electrode layer and the second transparent electrode layer are powered, and the liquid crystal module is in the privacy mode when the first transparent electrode layer and the second transparent electrode layer are not powered. In such embodiments, the liquid crystal module can be made in the transparent mode when the first transparent electrode layer and the second transparent electrode layer are powered, and made in the privacy mode when the first transparent electrode layer and the second transparent electrode layer are not powered. Likewise, the switching of the liquid crystal module between the transparent mode and the privacy mode can be implemented accurately and reliably.

According to a second aspect of the present disclosure, there is provided glass comprising the liquid crystal projection layer according to the first aspect of the present disclosure; and the first glass.

In some embodiments, the glass further comprises: a flexible solar cell layer disposed between the first glass and the liquid crystal module and configured to generate electricity when being irradiated by light. In such embodiments, additional energy supply can be provided by disposing the flexible solar cell layer to convert solar energy into electric energy. Such glass for example may be used as a sunroof of the vehicle, to provide additional electrical power to the vehicle, such that the vehicle is more energy-saving and environmentally friendly.

In some embodiments, the glass further comprises: an infrared blocking layer disposed between the first glass and the liquid crystal module and configured to prevent infrared rays passing through the first glass from propagating towards the liquid crystal module. In such embodiments, the infrared blocking layer can prevent infrared rays from passing through the glass, thereby reducing the rise of the temperature in a vehicle, a building, or other sites in a hot season.

In some embodiments, the glass further comprises: a transparent low emissivity layer disposed on a side of the transparent projection layer away from the first glass and having a characteristic that an emissivity to light is less than a first threshold. In such embodiments, the transparent low emissivity layer can reflect the heat impinged onto the transparent low emissivity layer in the vehicle or the building, etc. back to maintain the temperature in the vehicle, the building or other sites to a certain extent in a cold season.

In some embodiments, the transparent projection layer comprises at least one of the following: a transparent display film adhered to the liquid crystal module through a transparent adhesive layer and configured to display the projected image; a doped transparent adhesive layer adhered to a side of the liquid crystal module away from the first glass and configured to display the projected image. In such embodiments, the transparent display film or the doped transparent adhesive layer can reliably scatter the light projected thereon, thereby clearly displaying the image projected on the glass.

In some embodiments, the glass further comprises: a second glass stacked with the first glass and comprising a third surface and a fourth surface opposite to each other, the third surface facing towards the second surface; wherein the liquid crystal module and the transparent projection layer are disposed between the first glass and the second glass. In such embodiments, the first glass and the second glass may form a laminated glass. Such a laminated glass is applicable for various application scenarios, such as vehicles, buildings or other sites.

In some embodiments, the glass further comprises: a transparent low emissivity layer coated on the fourth surface and having a characteristic that an emissivity to light is less than a first threshold. In such embodiments, the transparent low emissivity layer can reflect the heat impinged onto the transparent low emissivity layer in the vehicle or the building, etc. back to maintain the temperature in the vehicle, the building or other sites to a certain extent in the cold season.

In some embodiments, the transparent projection layer comprises at least one of the following: a doped transparent adhesive layer adhering the liquid crystal module to the second glass and configured to display the projected image; and a transparent display layer disposed on the third surface and configured to display the projected image. In such embodiments, the doped transparent adhesive layer or the transparent display layer can reliably scatter the light projected thereon, thereby clearly displaying the projected image.

In some embodiments, the glass is vehicle glass or building glass.

In the event that the glass according to the embodiments of the present disclosure is used as vehicle glass, if projection is not performed on the glass, the liquid crystal module may be made in the transparent mode, thereby making the vehicle glass transparent; in addition, if projection is not performed on the glass but the people in the vehicle need a certain degree of privacy, the liquid crystal module may be made in the privacy mode, thereby making the vehicle glass opaque; in addition, if projection is performed on the vehicle glass by a projector and the user does not want the projected image to be seen by people outside the vehicle, the liquid crystal module may be made in the privacy mode, thereby making the vehicle glass opaque; in addition, if projection is performed on the vehicle glass by a projector and the user wants the projected image to be seen by people outside the vehicle, the liquid crystal module may be made in the transparent mode, so that people inside and outside the vehicle can all see the image projected on the vehicle glass.

Similarly, in the event that the glass according to the embodiments of the present disclosure is used as building glass, if projection is not performed on the glass, the liquid crystal module may be made in the transparent mode, thereby making the building glass transparent; in addition, if projection is not performed on the glass but the people in the building need a certain degree of privacy, the liquid crystal module may be made in the privacy mode, thereby making the building glass opaque; in addition, if projection is performed on the building glass by a projector and the user does not want the projected image to be seen by people outside the building, the liquid crystal module may be made in the privacy mode, thereby making the building glass opaque; in addition, if projection is performed on the building glass by a projector and the user wants the projected image to be seen by people outside the building, the liquid crystal module may be made in the transparent mode, so that people inside and outside the vehicle can all see the image projected on the building glass.

According to a third aspect of the present disclosure, there is provided a vehicle comprising the liquid crystal projection layer according to the first aspect of the present disclosure; and a projector configured to provide the projected image towards the transparent projection layer in the glass.

According to a fourth aspect of the present disclosure, there is provided a vehicle comprising the glass according to the second aspect of the present disclosure; and a projector configured to provide the projected image towards the transparent projection layer in the glass.

According to a fifth aspect of the present disclosure, there is provided a method for manufacturing a liquid crystal projection layer for use in a glass. The glass comprises a first glass which comprises a first surface and a second surface opposite to each other. The method comprises: providing a transparent projection layer disposed on a side of the first glass close to the second surface and configured to display a projected image received from a projector; and disposing a liquid crystal module between the first glass and the transparent projection layer, the liquid crystal module being configured to be switchable between a transparent mode and a privacy mode, wherein in the transparent mode, the liquid crystal module allows the projected image displayed on the transparent projection layer to be transmitted towards the first glass, and in the privacy mode, the liquid crystal module prevents the projected image displayed on the transparent projection layer from being transmitted towards the first glass.

According to a sixth aspect of the present disclosure, there is provided a method for manufacturing a glass, comprising: providing a first glass including a first surface and a second surface opposite to each other; disposing a transparent projection layer on a side of the first glass close to the second surface, the transparent projection layer being configured to display a projected image received from a projector; and disposing a liquid crystal module between the first glass and the transparent projection layer, the liquid crystal module being configured to be switchable between a transparent mode and a privacy mode, wherein in the transparent mode, the liquid crystal module allows the projected image displayed on the transparent projection layer to be transmitted towards the first glass, and in the privacy mode, the liquid crystal module prevents the projected image displayed on the transparent projection layer from being transmitted towards the first glass.

In some embodiments, the method further comprises: providing a second glass including a third surface and a fourth surface opposite to each other, the third surface facing towards the second surface; and disposing the liquid crystal module and the transparent projection layer between the second surface and the third surface.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### DESCRIPTION OF DRAWINGS

Through the following detailed descriptions with reference to the accompanying drawings, the above and other objectives, features and advantages of the example embodiments disclosed herein will become more comprehensible. In the drawings, several example embodiments disclosed herein will be illustrated in an example and in a non-limiting manner, wherein:
FIG. 1 illustrates a transparent projection display solution according to an embodiment of the present disclosure;
FIG. 2 illustrates a schematic structural diagram of a glass according to an embodiment of the present disclosure;
FIG. 3 illustrates a schematic structural diagram of a liquid crystal module according to an embodiment of the present disclosure;
FIG. 4 illustrates a working state of the liquid crystal module when being not powered according to an embodiment of the present disclosure, wherein polarization directions of a first polarizer and a second polarizer are perpendicular to each other;
FIG. 5 illustrates a working state of the liquid crystal module shown in FIG. 4 when being powered;
FIG. 6 illustrates a working state of a liquid crystal module when being not powered according to another embodiment of the present disclosure, wherein the polarization directions of the first polarizer and the second polarizer are parallel to each other;
FIG. 7 illustrates a working state of the liquid crystal module shown in FIG. 6 when being powered;
FIG. 8 illustrates a projection state when the glass is in a transparent mode according to an embodiment of the present disclosure;
FIG. 9 illustrates a projection state when the glass is in a privacy mode according to an embodiment of the present disclosure;
FIG. 10 illustrates a projection state when the glass is in a privacy mode according to another embodiment of the present disclosure;
FIG. 11 is a schematic structural diagram of glass according to another embodiment of the present disclosure;
FIG. 12 is a schematic structural diagram of glass according to a further embodiment of the present disclosure;
FIG. 13 is a schematic structural diagram of glass according to a further embodiment of the present disclosure;
FIG. 14 is a schematic structural diagram of glass according to a further embodiment of the present disclosure;
FIG. 15 is a schematic structural diagram of glass according to a further embodiment of the present disclosure;
FIG. 16 is a schematic structural diagram of glass according to a further embodiment of the present disclosure;
FIG. 17 is a schematic structural diagram of glass according to a further embodiment of the present disclosure;
FIG. 18 is a schematic structural diagram of glass according to a further embodiment of the present disclosure;
FIG. 19 is a schematic structural diagram of glass according to a further embodiment of the present disclosure; and
FIG. 20 illustrates a flowchart of a method of manufacturing a glass according to an embodiment of the present disclosure.

### DETAILED DESCRIPTION OF EMBODIEMTNS

Preferred embodiments of the present disclosure will be described as follows in greater detail with reference to the drawings. Although preferred embodiments of the present disclosure are illustrated in the drawings, it is to be understood that the present disclosure described herein may be implemented in various manners, not limited to the embodiments illustrated herein. Rather, these embodiments are provided to make the present disclosure described herein clearer and more complete and convey the scope of the present disclosure described herein completely to those skilled in the art.

As used herein, the term "includes" and its variants are to be read as openended terms that mean "includes, but is not limited to". The term "or" is to be read as "and/or" unless the context clearly indicates otherwise. The term "based on" is to be read as "based at least in part on". The term "an example embodiment" and "an embodiment" are to be read as "at least one example embodiment". The term "another embodiment" is to be read as "at least one other embodiment". The terms "first", "second" and others may denote different or identical objects.

As described above, the inventor of the present application discovers that a solution of performing projection display on the glass of the vehicle needs to solve problems in many aspects. For example, when projection display is performed on the glass of the vehicle, people in the vehicle might need to protect privacy and do not want the content projected on the glass of the vehicle to be seen by people outside the vehicle, and want the glass to keep transparent when privacy needs not to be protected; a conventional transparent projection display solution cannot meet such a demand, so the application of the transparent projection display solution on the glass of the vehicle is limited. The glass in embodiments of the present disclosure employs a combination of a transparent projection layer and a liquid crystal module, which can achieve the transparent projection display function as well as the privacy protection function when the transparent projection display is performed. Hereinafter, the principles of the present disclosure will be described in detail in conjunction with example embodiments with reference to the figures.

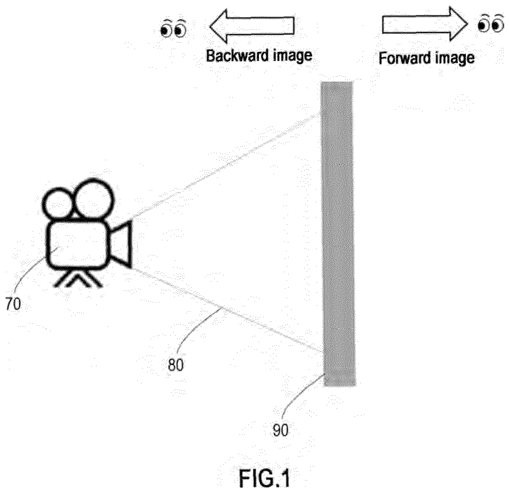

FIG. 1 illustrates a transparent projection display solution according to an embodiment of the present disclosure. As shown in FIG. 1, light 80 emitted by a projector 70 is projected onto a transparent projection display screen 90 and then scattered by the projection display screen 90 so as to be presented to the user. In addition, since the projection display screen 90 is transparent, the light 80 projected onto the projection display screen 90 may pass through the projection display screen 90 and continue to propagate forward. With such an arrangement, images projected on the projection display screen 90 can be seen on both sides of the projection display screen 90, and the images are a backward image and a forward image, respectively. However, when such a transparent projection display solution is applied to the glass of the vehicle, there might be the following demand. When projection display is performed on the glass of the vehicle, people in the vehicle might need to protect privacy and do not want the content projected on the glass of the vehicle to be seen by people outside the vehicle, and want the glass to keep transparent when privacy needs not to be protected. The conventional transparent projection display solution cannot meet such a demand, so the application of the transparent projection display solution on the glass of the vehicle is limited.

Therefore, there exists a demand for a new vehicle glass that can keep transparent when the vehicle is running normally and can achieve privacy protection when the transparent projection display is performed.

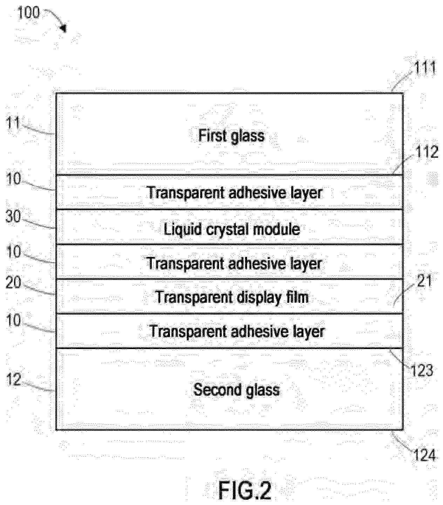

FIG. 2 illustrates a schematic structural diagram of a glass according to an embodiment of the present disclosure. As shown in FIG. 2, the glass 100 includes a first glass 11, a liquid crystal module 30, a transparent projection layer 20 and a second glass 12 which are stacked in turn. The first glass 11, the liquid crystal module 30, the transparent projection layer 20 and the second glass 12 are adhered to one another through a transparent adhesive layer 10. The transparent adhesive layer 10 may be for example polyvinyl butyral (PVB) or ethylene-vinyl acetate copolymer (EVA), or other known types of transparent adhesive layers or transparent adhesive layers available in the future. The scope of the present disclosure is not limited in this aspect.

The first glass 11 includes a first surface 111 and a second surface 112 opposite to each other. The second glass 12 includes a third surface 123 and a fourth surface 124 opposite to each other, and the third surface 123 faces towards the second surface 112. The transparent projection layer 20 is disposed between the liquid crystal module 30 and the second glass 12 and is configured to display a projected image received from a projector provided on a side of the second glass 12 facing towards the interior of the vehicle. In the embodiment, the first glass 11 represents an outer glass close to the exterior of the vehicle, and the second glass 12 represents an inner glass close to the passenger. The first surface 111 of the first glass 11 faces towards the exterior of the vehicle, the second surface 112 of the first glass 11 faces towards the second glass 12, the third surface 123 of the second glass 12 faces towards the first glass 11, and the fourth surface 124 of the second glass 12 faces towards the interior of the vehicle. Those skilled in the art can understand that the above-mentioned order of the glasses and the order of the glass surfaces are only examples, and those skilled in the art can make adjustments according to actual production. The light emitted by the projector is unpolarized after passing through the transparent projection layer 20. In the embodiment shown in FIG. 2, the transparent projection layer 20 includes a transparent display film 21. The transparent display film 21 is adhered to the liquid crystal module 30 and the second glass 12 through the transparent adhesive layer 10. In other embodiments, the transparent projection layer 20 may also be of other types, which will be described in detail below. The liquid crystal module 30 is disposed between the first glass 11 and the transparent projection layer 20 and configured to be switchable between a transparent mode and a privacy mode. In the transparent mode, the liquid crystal module 30 allows the projected image displayed on the transparent projection layer 20 to continue to be transmitted towards the first glass 11. In the privacy mode, the liquid crystal module 30 prevents the projected image displayed on the transparent projection layer 20 from being transmitted towards the first glass 11.

In the glass 100 according to the embodiment shown in FIG. 2, the transparent projection display on the glass 100 can be realized by the transparent projection layer 20, and the switching between the transparent mode and the privacy mode can be achieved by the liquid crystal module 30, wherein in the transparent mode, the glass 100 can keep transparent, and in the privacy mode, the image projected on the transparent projection layer 20 can be prevented from being transmitted towards the first glass 11, so that the projected image cannot be seen from a side of the first glass 11, thereby achieving the privacy protection. Such glass 100 can meet the demand that the glass can keep transparent when the vehicle is running normally and can achieve privacy protection when the transparent projection display is performed. In addition, different mode combinations can be realized by combining the transparent projection layer 20 and the liquid crystal module 30, thereby meeting the demands of different application scenarios.

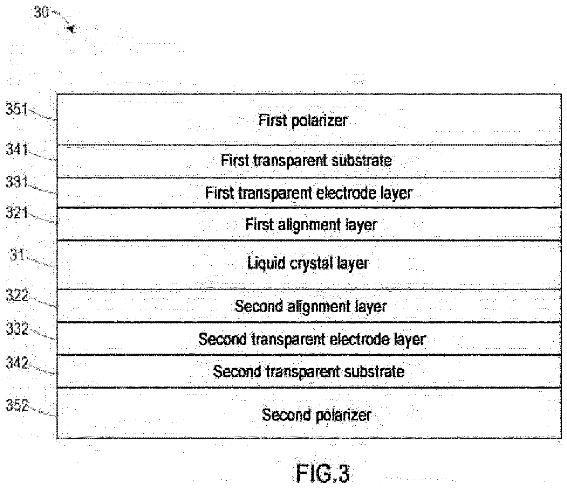

FIG. 3 illustrates a schematic structural diagram of the liquid crystal module 30 according to an embodiment of the present disclosure. As shown in FIG. 3, the liquid crystal module 30 substantially has a symmetrical structure, and includes, sequentially from inside to outside, a liquid crystal layer 31, a first alignment layer 321 and a second alignment layer 322, a first transparent electrode layer 331 and a second transparent electrode layer 332, a first transparent substrate 341 and a second transparent substrate 342, and a first polarizer 351 and a second polarizer 352.

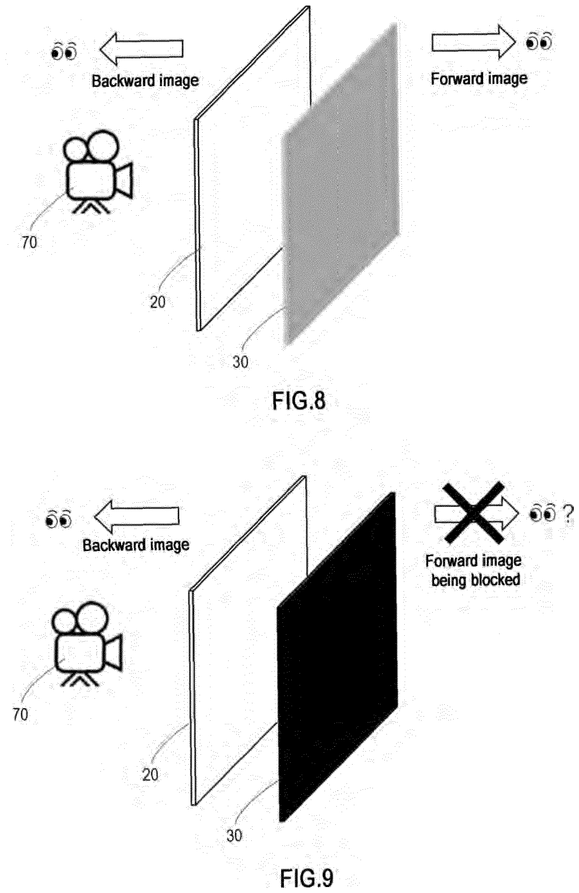

The liquid crystal layer 31 includes liquid crystal molecules and spacers (not shown). The spacers are used to support the liquid crystal molecules to provide a certain strength for the liquid crystal layer 31. The first alignment layer 321 and the second alignment layer 322 are respectively disposed on opposite sides of the liquid crystal layer 31. The first alignment layer 321 and the second alignment layer 322 are used to twist the liquid crystal molecules in the liquid crystal layer 31 when the first transparent electrode layer 331 and the second transparent electrode layer 332 are not powered, thereby presetting a deflection state of the liquid crystal molecules in the liquid crystal layer 31. The first transparent electrode layer 331 and the second transparent electrode layer 332 are respectively disposed on outer sides the first alignment layer 321 and the second alignment layer 322 relative to the liquid crystal layer 31. In the embodiment according to the present disclosure, the first transparent electrode layer 331 and the second transparent electrode layer 332 may be a Transparent Conductive Oxide (TCO) layer, such as a tin doped In₂O₃ (ITO), Fluorine doped SnO₂ (FTO), antimony or fluorine doped SnO2 (ATO), Al doped ZnO (AZO), etc. In other embodiments, the first transparent electrode layer 331 and the second transparent electrode layer 332 may also be other types of conductive layers. The first transparent electrode layer 331 and the second transparent electrode layer 332, when being powered, can change the deflection state of the liquid crystal molecules in the liquid crystal layer 31 so that the liquid crystal module 30 switches between the transparent mode and the privacy mode. The first transparent substrate 341 and the second transparent substrate 342 are respectively disposed on outer sides of the first transparent electrode layer 331 and the second transparent electrode layer 332 relative to the liquid crystal layer 31. The first transparent substrate 341 and the second transparent substrate 342 carry the first transparent electrode layer 331 and the second transparent electrode layer 332, respectively. The first transparent substrate 341 and the second transparent substrate 342 may be ultra-thin glass layers, resin layers or made of other materials. The first transparent electrode layer 331 and the second transparent electrode layer 332 may be coated on or formed on the first transparent substrate 341 and the second transparent substrate 342 in other manners. The first polarizer 351 and the second polarizer 352 are respectively disposed on the outer sides of the first transparent substrate 341 and the second transparent substrate 342 relative to the liquid crystal layer 31. The first polarizer 351 and the second polarizer 352 can respectively allow light in a specific polarization direction to pass through, while filtering out the rest of the light. The first polarizer 351 and/or the second polarizer 352 may be a light absorptive polarizer or a light reflective polarizer or a combination of both, which will be described in detail below with reference to FIG. 8 to FIG. 10. An effective range of the polarizer at least includes a range of visible light. The polarizer may provide a wide field of view and work with a high extinction ratio for incident light at non-normal incident angle.

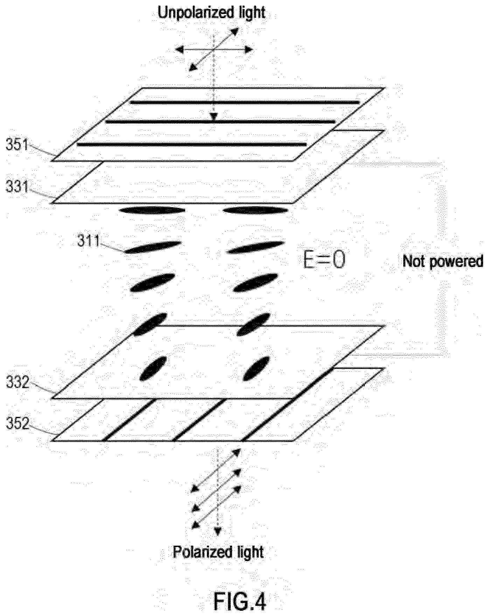

In the embodiments according to the present disclosure, the liquid crystal module 30 may be of various types, such as a twisted nematic (TN) liquid crystal module, a vertical alignment (VA) liquid crystal module, or a multi-domain vertical alignment (MVA) liquid crystal module. Hereinafter, the working principle of the liquid crystal module 30 will be described with the twisted nematic liquid crystal module as an example with reference to FIG. 4 to FIG. 7. It should be appreciated that other types of liquid crystal modules 30 may be operated in a similar manner, to implement the switching between the transparent mode and the privacy mode.

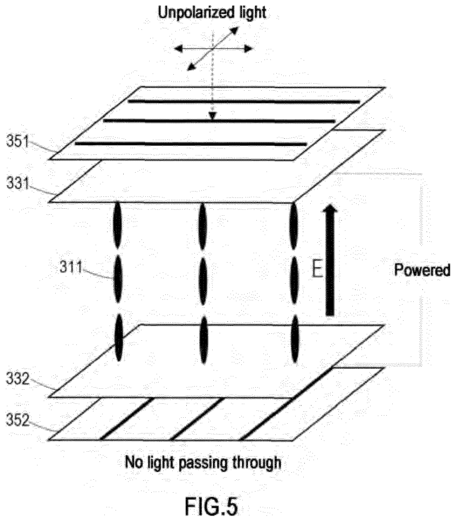

FIG. 4 illustrates a working state of the liquid crystal module 30 when being not powered according to an embodiment of the present disclosure, and FIG. 5 illustrates a working state of the liquid crystal module 30 shown in FIG. 4 when being powered. To clearly show the working principle of the liquid crystal module 30, some parts of the liquid crystal module 30 are omitted in FIG. 4 and FIG. 5.

As shown in FIG. 4, the polarization directions of the first polarizer 351 and the second polarizer 352 are perpendicular to each other. When the unpolarized light reaches the first polarizer 351, the first polarizer 351 can selectively allow the light in one polarization direction to pass through, and filter out the light in other polarization directions. Since the first transparent electrode layer 331 and the second transparent electrode layer 332 are not powered, there is no electric field (E=0) in the liquid crystal layer 31, so that the liquid crystal molecules 311 in the liquid crystal layer 31 are in a deflection state preset by the first alignment layer 321 and the second alignment layer 322. For example, the liquid crystal molecules 311 have an optical rotation feature for linearly polarized light without the electric field. At this time, the deflection state of the liquid crystal molecules 311 in the liquid crystal layer 31 upon reaching the second polarizer 352 is consistent with the polarization direction of the second polarizer 352, thus enabling light to pass through the second polarizer 352 and be output as polarized light. In this way, the liquid crystal module 30 can be made in the transparent mode. In an embodiment, the polarized light is linearly polarized light. In addition, the contrast of the liquid crystal can be adjusted by adjusting the voltage applied to both ends of the electrode, so that the liquid crystal module switches between the transparent mode and the privacy mode.

As shown in FIG. 5, since the first transparent electrode layer 331 and the second transparent electrode layer 332 are powered, the electric field E exists in the liquid crystal layer 31. Under the action of the electric field E, the deflection state of the liquid crystal molecules 311 in the liquid crystal layer 31 changes. At this time, the deflection state of the liquid crystal molecules 311 in the liquid crystal layer 31 upon reaching the second polarizer 352 is inconsistent with the polarization direction of the second polarizer 352, so that the light is blocked by the second polarizer 352 and no light passes through the second polarizer 352. In this way, the liquid crystal module 30 can be made in the privacy mode.

The switching of the liquid crystal module 30 between the transparent mode and the privacy mode can be accurately and reliably achieved by making the polarization directions of the first polarizer 351 and the second polarizer 352 perpendicular to each other. In addition, the power consumption of the liquid crystal module 30 can be reduced since the first transparent electrode layer 331 and the second transparent electrode layer 332 are powered only when projection display needs to be performed on the glass 100 and the privacy protection is required, and the first transparent electrode layer 331 and the second transparent electrode layer 332 need not to be powered in other cases.

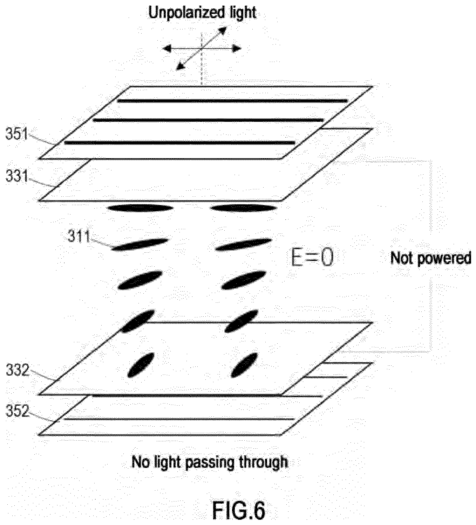

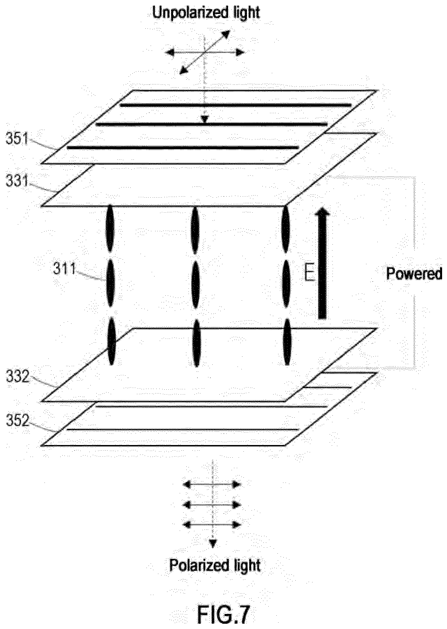

FIG. 6 illustrates a working state of the liquid crystal module 30 when being not powered according to another embodiment of the present disclosure, and FIG. 7 illustrates a working state of the liquid crystal module 30 shown in FIG. 6 when being powered. Similarly, to clearly show the working principle of the liquid crystal module 30, some parts of the liquid crystal module 30 are omitted in FIG. 6 and FIG. 7.

As shown in FIG. 6, the polarization directions of the first polarizer 351 and the second polarizer 352 are parallel to each other. When the unpolarized light reaches the first polarizer 351, the first polarizer 351 can selectively allow the light in one polarization direction to pass through, and filter out the light in other polarization directions. Since the first transparent electrode layer 331 and the second transparent electrode layer 332 are not powered, there is no electric field (E=0) in the liquid crystal layer 31, so that the liquid crystal molecules 311 in the liquid crystal layer 31 are in the deflection state preset by the first alignment layer 321 and the second alignment layer 322. At this time, the deflection state of the liquid crystal molecules 311 in the liquid crystal layer 31 upon reaching the second polarizer 352 is inconsistent with the polarization direction of the second polarizer 352, so that the light is blocked by the second polarizer 352 and no light passes through the second polarizer 352. In this way, the liquid crystal module 30 can be made in the privacy mode.

As shown in FIG. 7, since the first transparent electrode layer 331 and the second transparent electrode layer 332 are powered, the electric field E exists in the liquid crystal layer 31. Under the action of the electric field E, the deflection state of the liquid crystal molecules 311 in the liquid crystal layer 31 changes. At this time, the deflection state of the liquid crystal molecules 311 in the liquid crystal layer 31 upon reaching the second polarizer 352 is consistent with the polarization direction of the second polarizer 352, thus enabling light to pass through the second polarizer 352 and be output as polarized light. In this way, the liquid crystal module 30 can be made in the transparent mode.

The switching of the liquid crystal module 30 between the transparent mode and the privacy mode can also be accurately and reliably achieved by making the polarization directions of the first polarizer 351 and the second polarizer 352 parallel to each other.

It should be appreciated that in other embodiments, the polarization directions of the first polarizer 351 and the second polarizer 352 may also be in other relationships, and the switching of the liquid crystal module 30 between the transparent mode and the privacy mode can also be achieved. This will not be detailed any more herein.

FIG. 8 to FIG. 10 illustrate different working states of the glass 100 according to embodiments of the present disclosure. Referring to FIG. 8 first, FIG. 8 shows a projection state of the glass 100 in the transparent mode according to an embodiment of the present disclosure, wherein the first polarizer 351 and/or the second polarizer 352 of the glass 100 in FIG. 8 may be a light absorptive polarizer and/or a light reflective polarizer. As shown in FIG. 8, the light emitted by the projector 70 is projected onto the transparent projection layer 20. The transparent projection layer 20 can scatter the received light, thereby presenting a projected image to the user in the vehicle. In addition, the light projected on the transparent projection layer 20 can pass through the transparent projection layer 20 and continue to propagate towards the liquid crystal module 30. Since the liquid crystal module 30 is in the transparent mode, the light propagating onto the liquid crystal module 30 can pass through the liquid crystal module 30 and continue to propagate. With such an arrangement, the images projected on the transparent projection layer 20 can be seen on both sides of the glass 100, and the images are a backward image and a forward image, respectively.

FIG. 9 illustrates a projection state when the glass 100 is in a privacy mode according to an embodiment of the present disclosure, wherein the first polarizer 351 and the second polarizer 352 of the glass 100 in FIG. 9 are light absorptive polarizers. As shown in FIG. 9, the light emitted by the projector 70 is projected onto the transparent projection layer 20. The transparent projection layer 20 can scatter the received light, thereby presenting the projected image to the user in the vehicle. In addition, the light projected on the transparent projection layer 20 can pass through the transparent projection layer 20 and continue to propagate towards the liquid crystal module 30. Since the liquid crystal module 30 is in the privacy mode at this time, the liquid crystal module 30 presents black or other colors, so the light propagating onto the liquid crystal module 30 cannot pass through the liquid crystal module 30. With such an arrangement, the image projected on the transparent projection layer 20 can only be seen from the inner side of the glass 100, namely, the backward image. The forward image cannot be seen on front side of the glass 100. As viewed from the outside of the glass 100, the glass 100 presents black or other colors, and the projected image cannot be seen.

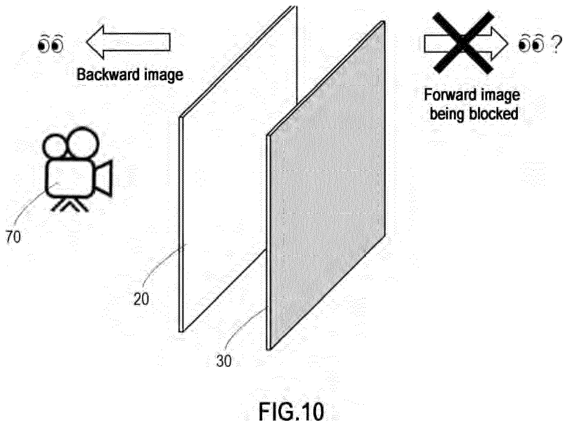

FIG. 10 illustrates a projection state when the glass 100 is in the privacy mode according to another embodiment of the present disclosure, wherein the first polarizer 351 and the second polarizer 352 of the glass 100 in FIG. 10 are light reflective polarizers. As shown in FIG. 10, the light emitted by the projector 70 is projected onto the transparent projection layer 20. The transparent projection layer 20 can scatter the received light, thereby presenting the projected image to the user. In addition, the light projected on the transparent projection layer 20 can pass through the transparent projection layer 20 and continue to propagate towards the liquid crystal module 30. Since the liquid crystal module 30 is in the privacy mode at this time, and the liquid crystal module 30 is in the form of a mirror, the light propagating onto the liquid crystal module 30 cannot pass through the liquid crystal module 30. With such an arrangement, the image projected on the transparent projection layer 20 can only be seen from the inside the glass 100, namely, the backward image. The forward image cannot be seen from the outside of the glass 100. The glass 100 looks like a mirror as viewed from the outside of the glass 100.

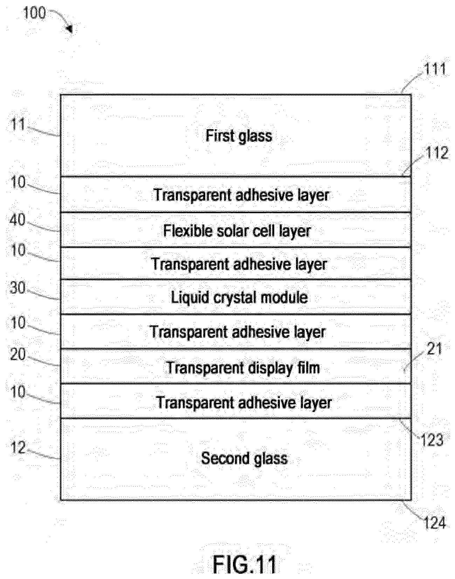

Hereinafter, example structures of the glass 100 according to other embodiments of the present disclosure will be described with reference to FIG. 11 to FIG. 19. The glass 100 as shown in FIG. 11 to FIG. 19 is more or less similar in structure to the glass 100 as shown in FIG. 2. In the following, only their structural differences will be described in detail, and the same parts will not be repeated.

The glass 100 as shown in FIG. 11 is similar in structure to the glass 100 as shown in FIG. 2, except that the glass 100 as shown in FIG. 11 further includes a flexible solar cell layer 40. The flexible solar cell layer 40 is disposed between the first glass 11 and the liquid crystal module 30, and is configured to generate electricity when being irradiated by light. The arrangement of the flexible solar cell layer 40 between the first glass 11 and the liquid crystal module 30 stems from considerations in many aspects. For example, the flexible solar cell layer 40 is not disposed on the third surface 123 or the fourth surface 124 of the second glass 12 because this will affect the power generation efficiency of the flexible solar cell layer 40. In addition, the flexible solar cell layer 40 is neither disposed on the first surface 111 of the first glass 11 because this will affect the weather resistance of the glass 100. The flexible solar cell layer 40 is adhered to the first glass 11 and the liquid crystal module 30 through the transparent adhesive layer 10. In such embodiments, additional energy supply can be provided by disposing the flexible solar cell layer 40 to convert solar energy into electric energy. Such glass 100 for example may be used as a sunroof of the vehicle, to provide additional electrical power to the vehicle, such that the vehicle is more energy-saving and environmentally friendly. In the embodiment according to the present disclosure, the flexible solar cell layer 40 may cover one or more parts of the first glass 11.

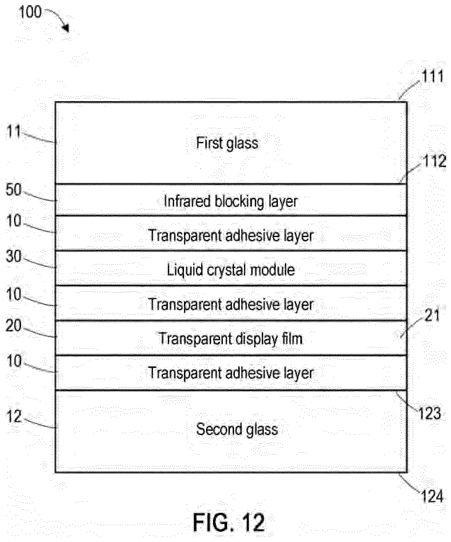

The glass 100 as shown in FIG. 12 is similar in structure to the glass 100 as shown in FIG. 2, except that the glass 100 as shown in FIG. 12 further includes an infrared blocking layer 50. The infrared blocking layer 50 is disposed between the first glass 11 and the liquid crystal module 30 and is configured to prevent infrared rays passing through the first glass 11 from propagating towards the liquid crystal module 30. The arrangement of the infrared blocking layer 50 between the first glass 11 and the liquid crystal module 30 also stems from considerations in multiple aspects. For example, the infrared blocking layer 50 is not disposed on the third surface 123 or the fourth surface 124 of the second glass 12 because for example, the infrared blocking layer may be silver-plated, and will affect the observation effect of the image projected on the transparent projection layer 20 if being disposed on the third surface 123 or the fourth surface 124 of the second glass 12. In addition, the infrared blocking layer 50 is neither disposed on the first surface 111 of the first glass 11 because this will affect the weather resistance of the glass 100. The infrared blocking layer 50 may be applied as a coating on the second surface 112 of the first glass 11 and adhered to the liquid crystal module 30 by the transparent adhesive layer 10. The infrared blocking layer 50 may be one or more silver coatings to reflect the infrared rays incident through the first glass 11. In such embodiments, the infrared blocking layer 50 can prevent infrared rays from passing through the glass 100, thereby reducing the temperature rise in the vehicle, the building, or other sites in a hot season.

Although not shown in the figures, at least one embodiment of the present invention further includes combining the flexible solar cell layer 40 with the infrared blocking layer 50 together. In this embodiment, the infrared blocking layer 50 does not include a silver-plated layer, but includes a PET anti-infrared layer. The flexible solar cell layer 40 is close to the second surface 112 of the first glass 11 and more outward than the infrared blocking layer 50.

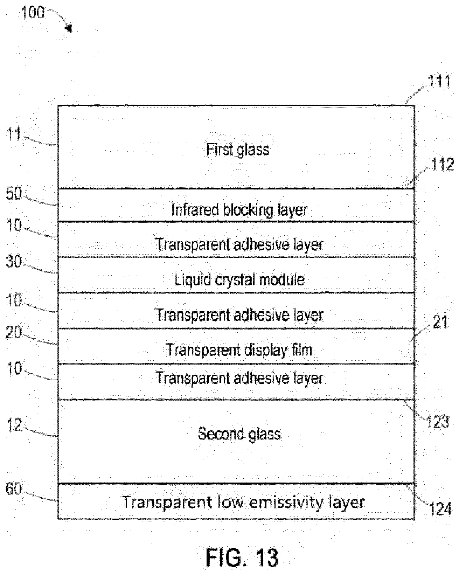

The glass 100 as shown in FIG. 13 is similar in structure to the glass 100 as shown in FIG. 12, except that the glass 100 as shown in FIG. 13 further comprises a transparent low emissivity layer 60. The transparent low emissivity layer 60 may be coated on or disposed on the fourth surface 124 of the second glass 12 in other manners. The transparent low emissivity layer 60 has a characteristic that an emissivity to light is less than a first threshold. The first threshold may be 0.2, for example. In such embodiments, the transparent low emissivity layer 60 can reflect the heat impinged onto the transparent low emissivity layer in the vehicle or the building, etc. back to maintain the temperature in the vehicle, the building or other sites to a certain extent in the cold season. It should be appreciated that, in some embodiments, the transparent low emissivity layer 60 may be disposed separately on the glass 100 without the infrared blocking layer 50 being disposed. The low emissivity layer 60 is a film series product composed of a plurality of layers of metals or other compounds. The low emissivity layer 60 is also called a Low-E (Low Emissivity) layer, and has excellent heat insulation effect and good light transmittance. With the low emissivity layer being added on the surface of the glass, the emissivity of the glass can be reduced, and the absorptivity is also reduced. The low emissivity layer can be a film series product composed of a plurality of layers of metals or other compounds, for example, a Transparent Conductive Oxide (TCO) layer, a tin doped In₂O₃ (ITO) transparent conductive film, an antimony or fluorine doped SnO₂ (ATO or FTO) transparent conductive film, and/or an Al doped ZnO (AZO) transparent conductive film, etc.

In addition, FIG. 13 shows that the transparent low emissivity layer 60 is on the fourth surface 123 of the second glass 12 when being applied to the vehicle.

Optionally, not shown in the figure, when the low emissivity layer 60 is applied to the building, the low emissivity layer 60 may employ a silver-plated layer and is opaque, as known to those skilled in the construction field. When the glass of the building employs a bi-layered glass with the middle being vacuum, the liquid crystal projection layer is located on the third surface 123 of the second glass 12, and the low emissivity layer 60 is located on the second surface 112 of the first glass. For example, the low emissivity layer 60 may be a silver-plated layer on the second surface 112, and/or the low emissivity layer 60 is adhered to the liquid crystal projection layer by PET glue. When the glass of the building employs a form with adhesive being sandwiched, the low emissivity layer may be a transparent conductive oxide layer as described in the previous vehicle glass, and may be located at the position shown in FIG. 13, which will not be repeated here.

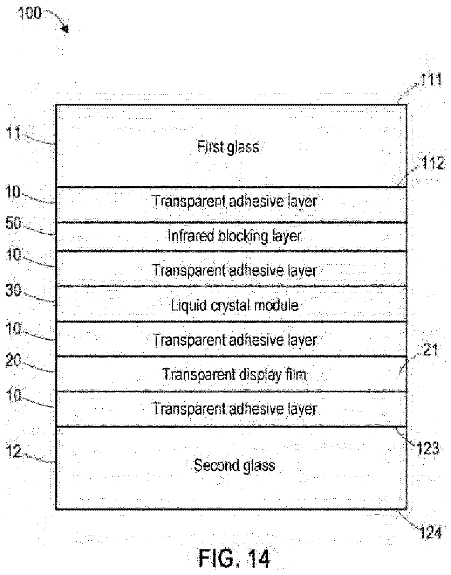

The glass 100 as shown in FIG. 14 is similar in structure to the glass 100 as shown in FIG. 2, except that the glass 100 as shown in FIG. 14 further includes an infrared blocking layer 50. The infrared blocking layer 50 is disposed between the first glass 11 and the liquid crystal module 30 and is configured to prevent infrared rays passing through the first glass 11 from propagating towards the liquid crystal module 30. The infrared blocking layer 50 is adhered to the first glass 11 and the liquid crystal module 30 by the transparent adhesive layer 10. The infrared blocking layer 50 may be an infrared blocking resin film or other types of films to reflect infrared rays incident through the first glass 11. In such embodiments, the infrared blocking layer 50 can also prevent infrared rays from passing through the glass 100, thereby reducing the rise of the temperature in the vehicle, building or other sites in the hot season.

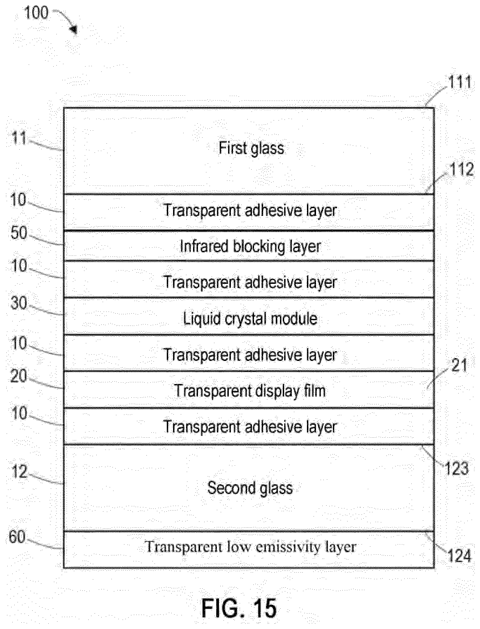

The glass 100 as shown in FIG. 15 is similar in structure to the glass 100 as shown in FIG. 14, except that the glass 100 as shown in FIG. 15 further includes a transparent low emissivity layer 60. The transparent low emissivity layer 60 may be coated on or disposed on the fourth surface 124 of the second glass 12 in other manners. The transparent low emissivity layer 60 has a characteristic that an emissivity to light is less than a first threshold. In such embodiments, the transparent low emissivity layer 60 can reflect the heat impinged onto the transparent low emissivity layer in the vehicle or the building, etc. back to maintain the temperature in the vehicle, the building or other sites to a certain extent in the cold season. It should be appreciated that, in some embodiments, the transparent low emissivity layer 60 may be disposed separately on the glass 100 without the infrared blocking layer 50 being disposed.

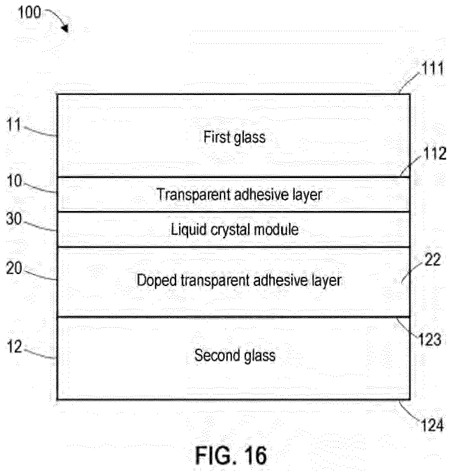

The glass 100 as shown in FIG. 16 is similar in structure to the glass 100 as shown in FIG. 2, except that the transparent projection layer 20 in the glass 100 as shown in FIG. 16 is formed as a doped transparent adhesive layer 22. The doped transparent adhesive layer 22 is adhered to a side of the liquid crystal module 30 away from the first glass 11 and to the second glass 12. The doped transparent adhesive layer 22 is configured to display an image projected thereon. In such embodiments, the doped transparent adhesive layer 22 can achieve adhesion function and reduce the need for the transparent adhesive layer 10 on one hand, and on the other hand, can reliably scatter the light projected thereon, thereby clearly displaying the projected image.

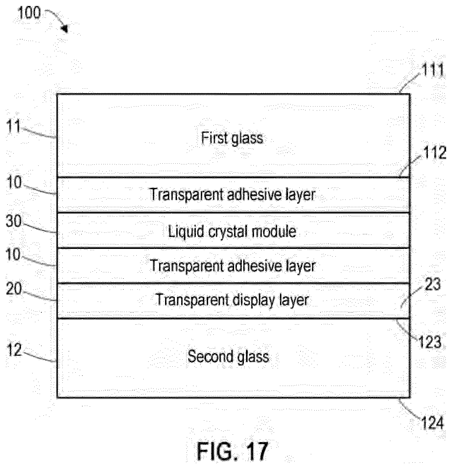

The glass 100 as shown in FIG. 17 is similar in structure to the glass 100 as shown in FIG. 2, except that the transparent projection layer 20 in the glass 100 as shown in FIG. 17 is formed as a transparent display layer 23. The transparent display layer 23 may be formed on the third surface 123 of the second glass 12 by coating or in other manners, and adhered to the liquid crystal module 30 by the transparent adhesive layer 10. In such embodiments, the use of the transparent display layer 23 on one hand reduces the need for the transparent adhesive layer 10, and on the other hand, can reliably scatter the light projected thereon, thereby clearly displaying the projected image.

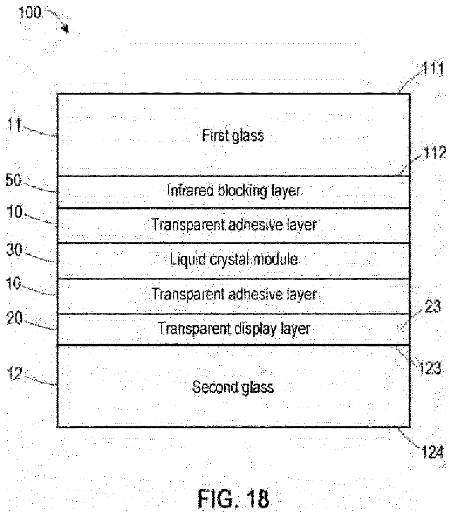

The glass 100 as shown in FIG. 18 is similar in structure to the glass 100 as shown in FIG. 17, except that the glass 100 as shown in FIG. 18 further includes an infrared blocking layer 50. The infrared blocking layer 50 is disposed between the first glass 11 and the liquid crystal module 30 and is configured to prevent infrared rays passing through the first glass 11 from propagating towards the liquid crystal module 30. The infrared blocking layer 50 may be coated on the second surface 112 of the first glass 11 and adhered to the liquid crystal module 30 by the transparent adhesive layer 10. The infrared blocking layer 50 may be one or more silver coatings to reflect the infrared rays incident through the first glass 11. In such embodiments, the infrared blocking layer 50 can prevent infrared rays from passing through the glass 100, thereby reducing the rise of the temperature in the vehicle, building or other sites in the hot season.

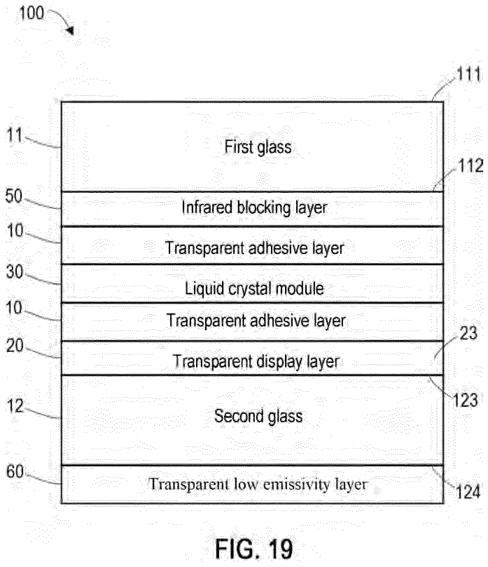

The glass 100 as shown in FIG. 19 is similar in structure to the glass 100 as shown in FIG. 18, except that the glass 100 as shown in FIG. 19 further includes a transparent low emissivity layer 60. The transparent low emissivity layer 60 may be coated on or disposed on the fourth surface 124 of the second glass 12 in other manners. The transparent low emissivity layer 60 has a characteristic that an emissivity to light is less than a first threshold. In such embodiments, the transparent low emissivity layer 60 can reflect the heat impinged onto the transparent low emissivity layer in the vehicle or the building, etc. back to maintain the temperature in the vehicle, the building or other sites to a certain extent in the cold season. It should be appreciated that, in some embodiments, the transparent low emissivity layer 60 may be disposed separately on the glass 100 without the infrared blocking layer 50 being disposed.

An example of the glass 100 according to some embodiments of the present disclosure is described above. It should be appreciated that those skilled in the art can easily envisage various combinations, changes or variations based on the content of the present disclosure, and such combinations, changes or variations also fall within the scope of the present disclosure.

In an embodiment according to the present disclosure, the transparent projection layer 20 and/or the liquid crystal module 30 may cover one or more parts of the first glass 11, or cover the entire first glass 11, thereby achieving the corresponding transparent projection display function. The scope of the present disclosure is not limited in this aspect.

In addition, in the embodiments according to the present disclosure, the first glass 11 and the second glass 12 form a laminated glass. Such laminated glass can be applied to various application scenarios, such as vehicles, buildings or other sites.

It should be understood that in other embodiments, the second glass 12 may be omitted, so that the glass 100 is formed as a single-layer glass. In the case of the single-layer glass, a projector provided on a side of the transparent projection layer 20 away from the first glass 11 can also be used to achieve projection display on the transparent projection layer 20, and the liquid crystal module 30 can also be used to achieve the switching between transparent mode and privacy mode. In addition, in the case of the single-layer glass, the operation of other structures in the glass 100 is not affected, which is clear to those skilled in the art.

In addition, optionally, a liquid crystal projection layer may be disposed on the fourth surface 124 of the second glass 12. In this case, the fourth surface 124 of the second glass 12 does not include a low emissivity layer.

The glass 100 according to the embodiments of the present disclosure may be used in various application scenarios, such as on vehicles, buildings or other sites.

In the event that the glass 100 according to the embodiments of the present disclosure is used as vehicle glass, if projection is not performed on the glass 100, the liquid crystal module 30 may be made in the transparent mode, thereby making the vehicle glass transparent; in addition, if projection is not performed on the glass 100 but the people in the vehicle need a certain degree of privacy, the liquid crystal module 30 may be made in the privacy mode, thereby making the vehicle glass opaque; in addition, if projection is performed on the vehicle glass by a projector and the user does not want the projected image to be seen by people outside the vehicle, the liquid crystal module 30 may be made in the privacy mode, thereby making the vehicle glass opaque; in addition, if projection is performed on the vehicle glass by a projector and the user wants the projected image to be seen by people outside the vehicle, the liquid crystal module 30 may be made in the transparent mode, so that people inside and outside the vehicle can all see the image projected on the vehicle glass.

Similarly, in the event that the glass 100 according to the embodiments of the present disclosure is used as building glass, if projection is not performed on the glass 100, the liquid crystal module 30 may be made in the transparent mode, thereby making the building glass transparent; in addition, if projection is not performed on the glass 100 but the people in the building need a certain degree of privacy, the liquid crystal module 30 may be made in the privacy mode, thereby making the building glass opaque; in addition, if projection is performed on the building glass by a projector and the user does not want the projected image to be seen by people outside the building, the liquid crystal module 30 may be made in the privacy mode, thereby making the building glass opaque; in addition, if projection is performed on the building glass by a projector and the user wants the projected image to be seen by people outside the building, the liquid crystal module 30 may be made in the transparent mode, so that people inside and outside the vehicle can all see the image projected on the building glass.

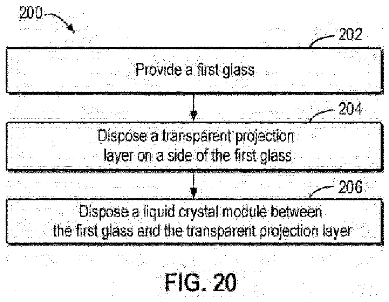

FIG. 20 shows a flowchart of a method of manufacturing a glass according to an embodiment of the present disclosure. As shown in FIG. 20, the method 200 comprises: at 202, providing a first glass including a first surface and a second surface opposite to each other; at 204, disposing a transparent projection layer on a side of the first glass close to the second surface, the transparent projection layer being configured to display the projected image received from the projector; and at 206, disposing the liquid crystal module between the first glass and the transparent projection layer, the liquid crystal module being configured to be switchable between a transparent mode and a privacy mode, wherein in the transparent mode, the liquid crystal module allows the projected image displayed on the transparent projection layer to be transmitted towards the first glass, and in the privacy mode, the liquid crystal module prevents the projected image displayed on the transparent projection layer from being transmitted towards the first glass.

In some embodiments, the method 200 further comprises: providing a second glass including a third surface and a fourth surface opposite to each other, the third surface facing towards the second surface; and disposing the liquid crystal module and the transparent projection layer between the second surface and the third surface.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A liquid crystal projection layer for use in a glass, the glass comprising a first glass which comprises a first surface and a second surface opposite to each other, the liquid crystal projection layer comprising:
a transparent projection layer disposed on a side of the first glass close to the second surface and configured to display a projected image received from a projector; and
a liquid crystal module disposed between the first glass and the transparent projection layer and configured to be switchable between a transparent mode and a privacy mode, wherein in the transparent mode, the liquid crystal module allows the projected image displayed on the transparent projection layer to be transmitted towards the first glass, and in the privacy mode, the liquid crystal module prevents the projected image displayed on the transparent projection layer from being transmitted towards the first glass.

2. The liquid crystal projection layer according to claim 1, wherein the liquid crystal module comprises:
a liquid crystal layer comprising liquid crystal molecules;
a first alignment layer and a second alignment layer which are respectively disposed on opposite sides of the liquid crystal layer, and configured to preset a deflection state of the liquid crystal molecules in the liquid crystal layer;
a first transparent electrode layer and a second transparent electrode layer which are respectively disposed on outer sides of the first alignment layer and the second alignment layer relative to the liquid crystal layer, and configured to change the deflection state of the liquid crystal molecules in the liquid crystal layer when being powered, so that the liquid crystal module switches between the transparent mode and the privacy mode;
a first transparent substrate and a second transparent substrate which are respectively disposed on outer sides of the first transparent electrode layer and the second transparent electrode layer relative to the liquid crystal layer and configured to carry the first transparent electrode layer and the second transparent electrode layer, respectively; and
a first polarizer and a second polarizer which are respectively disposed on outer sides of the first transparent substrate and the second transparent substrate relative to the liquid crystal layer.

3. The liquid crystal projection layer according to claim 2,
wherein polarization directions of the first polarizer and the second polarizer are perpendicular to each other, and
wherein the liquid crystal module is in the privacy mode when the first transparent electrode layer and the second transparent electrode layer are powered, and the liquid crystal module is in the transparent mode when the first transparent electrode layer and the second transparent electrode layer are not powered.

4. The liquid crystal projection layer according to claim 2, wherein polarization directions of the first polarizer and the second polarizer are parallel to each other, and
wherein the liquid crystal module is in the transparent mode when the first transparent electrode layer and the second transparent electrode layer are powered, and the liquid crystal module is in the privacy mode when the first transparent electrode layer and the second transparent electrode layer are not powered.

5. A glass, comprising:
the liquid crystal projection layer according to any of claims 1-4; and
the first glass.

6. The glass according to claim 5, further comprising:
a flexible solar cell layer disposed between the first glass and the liquid crystal module and configured to generate electricity when being irradiated by light.

7. The glass according to claim 5, further comprising:
an infrared blocking layer disposed between the first glass and the liquid crystal module and configured to prevent infrared rays passing through the first glass from propagating towards the liquid crystal module.

8. The glass according to claim 5, further comprising:
a transparent low emissivity layer disposed on a side of the transparent projection layer away from the first glass and having a characteristic that an emissivity to light is less than a first threshold.

9. The glass according to any of claims 5-8, wherein the transparent projection layer comprises at least one of the following:
a transparent display film adhered to the liquid crystal module through a transparent adhesive layer and configured to display the projected image;
a doped transparent adhesive layer adhered to a side of the liquid crystal module away from the first glass and configured to display the projected image.

10. The glass according to any of claims 5-8, further comprising:
a second glass stacked with the first glass and comprising a third surface and a fourth surface opposite to each other, the third surface facing towards the second surface;
wherein the liquid crystal module and the transparent projection layer are disposed between the first glass and the second glass.

11. The glass according to claim 10, further comprising:
a transparent low emissivity layer coated on the fourth surface and having a characteristic that an emissivity to light is less than a first threshold.

12. The glass according to claim 10, wherein the transparent projection layer comprises at least one of the following:
a doped transparent adhesive layer adhering the liquid crystal module to the second glass and configured to display the projected image; and
a transparent display layer disposed on the third surface and configured to display the projected image.

13. The glass according to any of claims 5-8 and 11-12, wherein the glass is a vehicle glass or a building glass.

14. A vehicle, comprising:
the liquid crystal projection layer according to any of claims 1-4; and
a projector configured to provide the projected image towards the transparent projection layer in the glass.

15. A vehicle, comprising:
the glass according to any of claims 5-13; and
a projector configured to provide the projected image towards the transparent projection layer in the glass.

16. A method for manufacturing a liquid crystal projection layer for use in a glass, the glass comprising a first glass which comprises a first surface and a second surface opposite to each other, the method comprising:
providing a transparent projection layer disposed on a side of the first glass close to the second surface and configured to display a projected image received from a projector; and
disposing a liquid crystal module between the first glass and the transparent projection layer, the liquid crystal module being configured to be switchable between a transparent mode and a privacy mode, wherein in the transparent mode, the liquid crystal module allows the projected image displayed on the transparent projection layer to be transmitted towards the first glass, and in the privacy mode, the liquid crystal module prevents the projected image displayed on the transparent projection layer from being transmitted towards the first glass.

17. A method for manufacturing a glass, comprising:
providing a first glass including a first surface and a second surface opposite to each other;
disposing a transparent projection layer on a side of the first glass close to the second surface, the transparent projection layer being configured to display a projected image received from a projector; and
disposing a liquid crystal module between the first glass and the transparent projection layer, the liquid crystal module being configured to be switchable between a transparent mode and a privacy mode, wherein in the transparent mode, the liquid crystal module allows the projected image displayed on the transparent projection layer to be transmitted towards the first glass, and in the privacy mode, the liquid crystal module prevents the projected image displayed on the transparent projection layer from being transmitted towards the first glass.

18. The method according to claim 17, further comprising:
providing a second glass including a third surface and a fourth surface opposite to each other, the third surface facing towards the second surface; and
disposing the liquid crystal module and the transparent projection layer between the second surface and the third surface.
